Europäisches Patentamt

European Patent Office

Office européen des brevets

(11) Veröffentlichungsnummer: **0 203 976**

**B1**

(12) **EUROPÄISCHE PATENTSCHRIFT**

(45) Veröffentlichungstag der Patentschrift:
**31.05.89**

(21) Anmeldenummer: **86900062.0**

(22) Anmeldetag: **13.12.85**

(86) Internationale Anmeldenummer:
**PCT/DE 85/00529**

(87) Internationale Veröffentlichungsnummer:
**WO 86/03822 (03.07.86 Gazette 86/14)**

(51) Int. Cl.⁴: **F 23 G 7/06,** F 23 C 11/00,
B 01 J 15/00, B 01 J 35/02,
B 01 D 53/36

(54) **EINRICHTUNG ZUM KATALYTISCHEN VERBRENNEN, INSBESONDERE NACHBRENNEN VON GASEN, ABGASEN, RAUCHGASEN ODER ÄHNLICHEN BRENNBAREN SUBSTANZEN.**

(30) Priorität: **15.12.84  DE 8437188 U**

(43) Veröffentlichungstag der Anmeldung:
**10.12.86 Patentblatt 86/50**

(45) Bekanntmachung des Hinweises auf die Patenterteilung:
**31.05.89 Patentblatt 89/22**

(84) Benannte Vertragsstaaten:
**AT CH DE LI SE**

(56) Entgegenhaltungen:
**FR-A-2 161 355**
**FR-A-2 380 072**
**GB-A-591 669**

(73) Patentinhaber: **Lühr, Wolfgang, Gildeweg 1a, D-2362 Wahlstedt (DE)**

(72) Erfinder: **ANZ, Gualterio, Börnsener Str. 18, D-2055 Aumühle (DE)**
Erfinder: **GIRNATIS, Uta, Abt- Williram- Str. 6, D-8017 Ebersberg (DE)**

(74) Vertreter: **Patentanwälte Wenzel & Kalkoff, Grubes Allee 26 Postfach 730466, D-2000 Hamburg 73 (DE)**

## Beschreibung

Die Erfindung betrifft eine Einrichtung zum katalytischen Verbrennen, insbesondere Nachbrennen von Gasen, Abgasen, Rauchgasen oder ähnlichen brennbaren Substanzen mit einer Trägerstruktur (Substrat) und einem auf dieser angebrachten Katalysator, wobei die Einrichtung im Strömungsweg der brennbaren Substanzen angeordnet ist und ein Basisteil mit von diesem getragenen, sich mit Katalysatorflächen quer in den Strömungsweg erstreckenden Trägerelementen umfaßt.

Eine Einrichtung dieser Art wird in den Rauchzug von Feuerungen für Gase, flüssige oder feste Brennstoffe eingebaut und dient der katalytischen Nachbrennung von Schadstoffen, die in der Feuerung aufgrund unvollständiger Verbrennung nicht verbrannt sind und sich entweder im Schornstein als Kreosot ablagern oder in die Umwelt gelangen.

Eine bekannte Einrichtung zum katalytischen Verbrennen (FR-A-2 161 355) umfaßt quer zur Strömung liegende Trägerelemente in Form von Bändern, die spiralförmig ausgebildet und in zueinander in Achsrichtung beabstandeter Anordnung konzentrisch mit einer Basisachse und einer Kreisringwand vorgesehen sind. Sie führen infolge der zu ihrer Befestigung erforderlichen Maßnahmen zu einer relativ komplizierten Bauweise und bilden mit ihren Katalysatorflächen ein Hindernis oder eine Schikane für den Durchgang eines Gases aus, so daß bei an sich wünschenswerter Nutzung einer möglichst großen Katalysatoroberfläche ungünstige, unkontrollierbare Turbulenzen verursachende Strämungsverhältnisse vorliegen und auch die Gefahr von Verstopfungen besteht.

Bei einer anderen bekannten Einrichtung zur katalytischen Oxidation (FR-A-2 380 072) ist ein axial angeordneter Zylinder mit einer großan Zahl mit einem Katalysator beschichteter Rippen vorgesehen, die sich gestreckt oder grkrümmt radial und nach außen in eine Reaktionskammer erstrecken, wobei die Rippen- bzw. Katalysatorflächen in Richtung der Strömung der nachzuverbrennenden Substanzen angeordnet sind. Um eine genügend große Kontaktfläche für den Katalysevorgang zu erhalten, müssen die Rippen relativ eng zueinander angeordnet sein. Sie bilden also sich in Strömungsrichtung erstreckende, verhältnismäßig enge Kanäle aus, die aufgrund von Flockenbildung und Ablagerung anderer in den Abgasen enthaltener Festkörpersubstanzen leicht verstopft werden. Um die Funktionsfähigkeit des Rauchgaszuges trotzdem zu gewährleisten und zu vermeiden, daß es unterhalb des Katalysators zu Anstauungen von Rauchgas mit allen damit verbundenen Gefahren (Rauchgasexplosionen etc.) kommt, muß bei solchen Anlagen ein By-pass vorgesehen werden, der bei Überschreitung bestimmter Grenzdrücke in Funktion tritt und den Raum unterhalb des Katalysators mit dem Schornstein kurzschließt. Die katalytische Funktion ist damit unterlaufen. Bei einer mit der vorerwähnten ähnlichen Einrichtung (GB-591 669 aufgrund ihrer Bauweise bei Wärmebeaufschlagung derart hohe Wärmespannungen, daß eine axial mit der Reaktionskammer angeordnete, die Wärme regulierende Kammer und eine Vorrichtung zur Zirkulation eines Wärme übertragenden Mediums durch die mit den Rippen eine integrale Baueinheit bildende Regulierungskammer vorgesehen sind, um Beschädigungen an bzw. Zerstörungen der Einrichtung (Absprengen von Teilen sus den Kanälen) zu vermeiden.

Der Erfindung liegt die Aufgabe zugrunde, eine Einrichtung der eingangs beschriebenen Art zu schaffen, bei der die Gefahr von Verstopfungen infolge Flockenbildung oder Ablagerung sonstiger Feststoffe ausgeschlossen ist, die einen hohen katalytischen Wirkungsgrad gewährleistet und bei hoher Betriebs- und Funktionssicherheit besonders einfach baut.

Diese Aufgabe wird nach der Erfindung in Verbindung mit den Merkmalen der eingangs genannten Einrichtung dadurch gelöst, daß die Tragerelemente als strahlen-, fächer- oder speichenförmig angeordnete Einzelstege mit geneigt zur Strömung vorgesehen, deren Richtung bestimmenden Katalysatorleitflächen ausgebildet sind. Damit ist eine Einrichtung vorgeschlagen, die die Ausbildung wesentlich breiterer Kanäle als die bekannte Nachbrenneinrichtung ermöglicht, gleichzeitig aber durch die Anordnung der Katalysatorleitflächen geneigt zur Strömungsrichtung ein ausreichendes Umspülen dieser Flächen und damit einen genügenden Katalysationskontakt zwischen brennbarer Substanz und Katalysatorschicht sicherstellt. Solche Bauelemente sind relativ kostengünstig herstellbar und, wie auch aus den nachstehenden Darlegungen hervorgeht, unter Ausbildung der verschiedensten Größen gut als Nachrüstteile für bestehende Feuerungen anzufertigen und anzubieten. Zudem gewährleisten die erfindungsgemäße Anordnung und Ausrichtung der Katalysatorflächen eine besonders günstige Wärmeleitung, die selbst regulierend wirkt und insbesondere auch bei einseitiger Wärmebeaufschlagung Zerstörungen vermeidet, so daß eine große Lebensdauer und Funktionssicherheit bei einfacher Bauweise erreicht sind.

Besonders vorteilhaft ist es, wenn die Vorrichtung eine Mehrzahl form- und/oder kraftschlüssig zusammenfügbarer Basisteile umfaßt, von denen sich die Trägerelemente mit ihren Katalysatorflächen in den Strömungsweg erstrecken. Eine solche Einrichtung kann nach dem einfachen Prinzip eines Baukastens bereitgestellt und montiert werden, wobei die Basisteile und damit ggf. auch die Trägerelemente jeweils für sich einzeln beschichtet werden können. So sind auch unterschiedliche Beschichtungen in praktisch beliebiger Weise erzeugbar, so daß letzten Endes die verschiedensten Kombinationen, Strukturen und Schichtungen für die unterschiedlichsten Einsatzzwecke und/ oder eine Anpassung an unterschiedliche Betriebsverhältnisse (z. B. durch sich im Rauchgasweg ergebende/einstellende unterschiedliche Zustände, Rauchgaszusammensetzungen, Temperaturen etc.) möglich und einfach sowie kostengünstig realisierbar sind. Bei eventuell eintretenden Beschädigungen ist leicht und kostengünstig ein Austausch einzelner Teile vorzunehmen, ohne daß es eines Ersatzes der gesamten Vorrichtung bedarf. Weiterhin kann man mit Hilfe dieses Grundaufbaus Katalysatoren beliebiger Bauhöhe für unterschiedlichste Durchsatzleistungen zusammenstellen. Mit anderen Worten wird die Anzahl der für den Einsatz benötigten einzelnen Bauteile durch die verlangte Leistung bestimmt.

Eine zweckmäßige Ausgestaltung der Erfindung besteht darin, daß die Trägerelemente an einem zweiteiligen, einen Innenund einen Außenmantel oder -ring bestimmenden Basisteil angeordnet sind. Damit baut die Einrichtung besonders kompakt und stabil, wobei die Trägerelemente auch quer zu ihrer Längserstreckung geteilt sein können, um eine besonders einfache Montagemöglichkeit zu erhalten und/oder um die Wärmebeanspruchbarkeit der Vorrichtung weiter zu erhöhen. Innen- und Außenmantel können als koaxiale Zylinder, vorzugsweise Kreiszylinder ausgeführt sein, um einen vorteilhaften geometrischen Aufbau zu erhalten.

In bevorzugter Ausbildung der Erfindung können die Basisteile als zylinderförmige Ringe ausgebildet sein, von denen sich die Trägerelemente strahlenförmig nach außen erstrecken. Mit anderen Worten bilden beim Zusammensetzen mehrerer solcher Bauteile die Basisteile eine Art "Wirbelsäule", von denen die Trägerelemente nach Art von Speichen oder Rippen nach außen hin verlaufen. Solche Bauteile sind einfach und kostengünstig zu fertigen, auf Vorrat zu halten und zu transportieren sowie einzubauen. Selbst bei nur einseitiger Erwärmung entstehen keine maßgeblichen Wärmespannungen im jeweiligen Bauteil.

Nach einer anderen zweckmäßigen Ausführungsform können die Basisteile als Segmente eines das Basisteil oder einen Teil desselben bestimmenden Hohlkörpermantels ausgebildet sein. In diesem Falle werden mehrere solcher Basisteile zu einem Ring zusammengefügt, und es können mehrere Ringe hintereinander, in Achs- oder Strömungsrichtung gesehen, aneinander angeordnet werden.

Im Hinblick auf eine sehr günstige Herstellung sowie auf eine vorteilhafte Konstruktion können sich die Trägerelemente von einem außen liegenden Basisteil strahlenförmig nach innen erstrecken. Die Verhältnisse hinsichtlich geringer Wärmespannungen sind die gleichen wie bei der zuvor beschriebenen Ausführungsform geschlossener zylinderförmiger Ringe mit nach außen hin sich strahlenförmig erstreckenden Trägerelementen.

Vorzugsweise können in Achs- bzw. Strömungsrichtung benachbarte Trägerelemente zueinander versetzt sein. Dadurch läßt sich die Strömungsrichtung des nachzuverbrennenden Gases im Verhältnis zu den zu umströmenden Katalysatorflächen beeinflussen, und zwar derart, daß dem Gas ein gewisser Drall verliehen wird, der zu Verwirbelungen und damit zu einem noch innigeren Umspülen der Trägerelemente führt. Durch geeignete Ausbildung kann man eine sich über die Gesamtlänge der Einrichtung erstreckende schraubenwendelförmige Strömung begründen, obwohl es natürlich ebensogut möglich ist, jede andere Art von gewünschter Strömung durch jeweils geeignetes Versetzen der Trägerelemente zueinander zu erzielen.

Um das Verhältnis der erforderlichen Katalysatorflächen zum Durchtrittsquerschnitts für das Gas möglichst zu optimieren, werden die Trägerelemente vorteilhaft als langgestreckte abgeflachte Stäbe, Speichen, Lamellen, Finger, Flügel od.dgl. ausgebildet, die einen ovalen oder sonstwie aerodynamisch günstigen Querschnitt haben können. Aus ähnlichen Gründen können die Trägerelemente mit ihren Katalysatorflächen zur Achs- oder Strömungsrichtung geneigt an den Basisteilen angeordnet sein.

Eine weitere besonders zweckmäßige und vorteilhafte Ausgestaltung der Erfindung besteht darin, daß die Trägerelemente mit nach Art von Rechen, Rippen, oder Kämmen vergrößerten Oberflächen ausgebildet sind. So ist die Fläche für die katalytische Wirkung zusätzlich vergrößert und zudem kann mit dem Maß der Neigung der Rechen, Rippen bzw. Kämme um ihre gemeinsame Achse gegenüber einer die Achse der Einrichtung senkrecht schneidenden Ebene ein bestimmter Strömungswiderstand eingerichtet und vorgegeben werden, wobei bei nicht oder weniger geneigten Rechen, Rippen bzw. Kämmen ein höherer Strömungswiderstand auftritt, der ein entsprechend langsameres Strömen der Rauchgase bewirkt.

Für kleinere Katalysator-Einrichtungen kann man vorteilhaft die Trägerelemente mit den Basisteilen integral ausbilden, weil sich dadurch Bauteile in vernünftigen Dimensionen im Hinblick auf Herstellung, Transport und Lagerung ergeben. Solche Elemente bieten sich insbesondere für kleinere Heizanlagen wie häusliche Feuerstätten an. Bei größeren Anlagen hingegen ist es ebenso gut möglich, Trägerelemente vorzusehen, die durch Formschluß mit den Basisteilen verbindbar sind. Eine Montage solcher Teile läßt sich an Ort und Stelle leicht vollziehen.

Hinsichtlich des Einbaus und einer einfachen Lagerung ist es besonders zweckmäßig, wenn die Basisteile mit den Trägerelementen von einem mehrteiligen Gehäusemantel umgeben und gehalten werden, der sich im wesentlichen in Achs- oder Strömungsrichtung erstreckt. Eine solche Anordnung ist u.a. auch im Hinblick auf die Wärmedehnung günstig, da der Mantel die Teile im wesentlichen formschlüssig in ihrer Lage hält und diese noch genügend Möglichkeiten zur seitlichen Bewegung haben. Die Mantelteile selbst können vorteilhaft kraftschlüssig zusammengehalten sein, Beispielsweise mit Hilfe von Spannringen aus wärmebeständigem Material.

Um in besonders einfacher Weise die versetzte Anordnung von in Achs- bzw. Strömungsrichtung benachbarten Trägerelementen und damit eine gewollte bestimmte Leitung des Abgasstromes bei gleichzeitiger einfacher Verstellmöglichkeit dieser Anordnung sicherzustellen, können in Achs- bzw. Strömungsrichtung benachbarte Basisteile mit Mitteln zum stufenweisen Verstellen der Winkelposition der jeweiligen Trägerelemente zueinander bzw. zur Herstellung einer Versatzanordnung zwischen diesen versehen sein. Solche Verstell- und/oder Versatzmittel können in zweckmäßiger Weise als formschlüssige Rastelemente. in Form von Kugeln, Zapfen, Noppen, Zähnen od. dgl. mit entsprechenden Gegenlagern vorgesehen sein. Diese Gegenlager sind in vorbestimmten Winkelabständen vorzusehen, so daß jeweils gewünschte Winkelveränderungen leicht einzustellen bzw. Versatzanordnungen leicht einzurichten sind, ohne daß es nachher im Betrieb zu irgendwelchen Veränderungen dieser Positionen kommt. Bei kleineren Durchmessern können Rastelemente etwa alle 10°, bei größeren Durchmessern sogar bis zu 1° vorgesehen sein. Insbesondere ist es für die Versatzanordnung zweckmäßig, an einem außen liegenden Basisteil Ausnehmungen als Gegenlager vorzusehen, die im Winkelabstand der Trägerelemente an deren Verbindungsstellen mit dem Basisteil angeordnet sind. Dabei ist an dem außen liegenden Basisteil ein Zahn etwa um 10° bzw. bis um 1° gegenüber der Ausnehmung versetzt. Durch die Verstellung bzw. durch den Versatz erfolgt eine Widerstandsänderung in der Strömung, und dadurch ändern sich die Verhältnisse bezüglich der umströmten Flächen; was auch zu einer Änderung der katalytischen Verbrennung führt.

In bevorzugter Weise bestehen die Basisteile und die Trägerelemente, aber auch die Teile des Gehäusemantels aus wärmebeständigem Material wie Keramik oder ähnlichen gebrannten Erden. Dieses Material weist, wie allerdings schon vom Stand der Technik her bekannt ist, mit als Katalysator dienen Edelmetallbeschichtungen besonders günstige Katalysatoreigenschaften auf.

Um ein insbesondere bei hoher Wärmebeaufschlagung und den dadurch entstehenden Spannungen im Material verursachtes Reißen nur an definierten Stellen zu erhalten und ein Zusammenbrechen oder vollständiges Zerstören der Einrichtung, speziell ihrer funktionswichtigen Teile zu vermeiden, sieht die Erfindung in besonders zweckmäßiger Weiterbildung vor, daß die Basisteile mit Sollbruchstellen ausgebildet sind. Insbesondere wird damit auch erreicht, daß die Katalysatorflächen bzw. die Trägerelemente nicht reißen und nicht beschädigt werden, so daß die Einrichtung funktionstüchtig bleiben kann.

Bei Anordnung der Trägerelemente an einem einen geschlossenen Innen- und/oder Außenring bildenden Basisteil ist es vorteilhaft, die Sollbruchstellen im wesentlichen mittig zwischen jeweils zwei benachbarten Trägerelementen anzuordnen, da bei dieser Gestaltung die auftretenden Wärmespannungsverhältnisse besonders zuverlässig zum definierten, an einer bestimmten Stelle vorgegebenen Bruch führen.

Um bei Temperaturschwankungen, die bei Unterschreitung bestimmter Mindest-Wärmewerte zu einem völligen Zusammenbruch der Nachverbrennung führen könnten, und auch beim Anheizen einerseits der Katalysatoreinrichtung genügend hohe Temperaturen zur Verfügung zu haben, können in vorteilhafter Weiterbildung der Erfindung in Achs- bzw. Strömungsrichtung verlaufende Drähte aus wärmebeständigem und gut wärmeleitendem Material, z. B. einer Chrom-Nickel-Legierung, vorgesehen sein, die im Bereich der Basisteile und Trägerelemente in eine Isoliermasse mit guten Wärmespeichereigenschaften eingebettet sind und außerhalb dieses Bereiches in den Strömungsweg hineinragen. Diese Drähte haben die Funktion, daß bei noch ungenügender Wärme der Abgase die eintrittsseitig angeordneten Drähte Energie schneller aufnehmen als die Trägerelemente und diese Energie zur Austrittsseite leiten, wo damit eine höhere Wärme zur Verfügung gestellt wird, so daß eine Zündung des Nachbrennvorganges zu einem früheren Zeitpunkt erfolgen kann. Kommt es während des Funktionsbetriebes hingegen zu Schwankungen und zu einem Absinken der Temperatur unter die katalytische Zündtemperatur, also zu einem Löschen der Nachbrennflamme, im unteren Bereich, so wird durch die Drähte vom austrittsseitigen Ende, an dem noch eine höhere Energiemenge zur Verfügung steht, Wärme zur Eintrittsseite zurückgeleitet und führt dort zu einer Erhöhung der Temperatur und damit entweder zur Aufrechterhaltung der Nachbrennflamme oder ggf. zu einer Neuzündung. Dabei kann die Isoliermasse aus keramischem Material bestehen, was den Vorteil hat, daß eine eindeutige Energieleitung innerhalb der Drähte erfolgt und keine Rückgabe von Energie zwischen den freiliegenden Endbereichen der Drähte eintritt. Zur Unterstützung dieses Vor- bzw. Nachzündeffektes können die Drähte in ihrer Zahl der der Trägerelemente der jeweils äußeren Lage der Trägerelemente entsprechen und sich nach Art von Winkelhalbierenden relativ zu den Trägerelementen erstrecken, so daß sie also mitten im Gasstrom plaziert sind.

Nach einer weiteren vorteilhaften Ausführungsmöglichkeit können innerhalb der Basisteile und Trägerelemente in Achs- bzw. Strömungsrichtung verlaufende Drähte aus wärmebeständigem und gut wärme- und elektrisch leitendem Material, z. B. aus einer Chrom-Nickel-Legierung, vorgesehen sein, die in einen Kern aus isolierendem, elektrisch nicht leitendem Material wie keramischem Material eingebettet sind, wobei dieser Kern von einem zu seiner Außenfläche beabstandeten Mantel umgeben und zwischen Kern und Mantel ein Kanal ausgebildet ist. In diesen Kanal können in von außen her steuerbarer Weise Gase oder andere Gemische eingeleitet werden, die im Nachverbrennungsvorgang zugesetzt werden sollen. Beispielsweise kann es sich dabei um Sauerstoff handeln, um eine Verbrennung zu intensivieren, oder auch um Kalk in Pulverform zum Zwecke der Bindung von schwefelförmigen Bestandteilen in den nachzuverbrennenden Abgasen. Auch hierbei können sich, um die durch die Trägerelemente vorbestimmte Strömungsrichtung günstig auszunutzen, die Drähte in ihrer Zahl der der Trägerelemente der austrittsseitig äußeren Lage derselben entsprechen und sich nach Art von Winkelhalbierenden relativ zu den Trägerelementen erstrecken.

Bei dieser Ausführungsform können die Drähte durch Beaufschlagung mit elektrischem Strom als Zünder oder Vorheizelemente fungieren. Zu diesem Zweck werden vorteilhaft wenigstens zwei Drähte eintrittsseitig außerhalb des Strömungsweges der zu katalysierenden brennbaren Substanzen verlaufen und an eine Energiequelle angeschlossen werden, während die austrittseitigen Enden als Zündwiderstände ausgebildet sind. Dies kann entweder dadurch erfolgen, daß zwischen den Drahtenden spulenförmige Widerstände angeordnet werden, aber es ist auch denkbar, zwischen ihren Enden eine Zündung mittels Funken zu erzeugen.

Weiterbildungen, Ausführungsmöglichkeiten und weitere Vorteile der Erfindung gehen aus der folgenden Beschreibung der in der schematischen Zeichnung dargestellten Ausführungsbeispiele hervor. Es zeigt

Fig. 1 einen Querschnitt durch eine erfindungsgemäße Einrichtung zur katalytischen Nachverbrennung,

Fig. 2 eine Draufsicht auf die Einrichtung der Fig. 1,

Fig. 3 eine ausschnittsweise Draufsicht auf ein Basiselement mit einer stufenweisen Nachstelleinrichtung in vergrößertem Maßstab,

Fig. 4 eine Seitenansicht mehrerer aneinander gelagerter Basisteile mit der Nachstelleinrichtung der Fig. 3,

Fig. 5 eine Möglichkeit zur Ummantelung der erfindungsgemäßen Einrichtung,

Fig. 6 in teilweise axonometrischer Ansicht eine abgewandelte Ausführungsform der erfindungsgemäßen Einrichtung beim Einsatz in einem Rauchgasabzug,

Fig. 7 eine andere Ausführungsmöglichkeit für die erfindungsgemäß

Fig. 8 einzusetzenden Bauteile und eine Draufsicht auf ein erfindungsgemäßes Einrichtungsbauteil sowie eine Teil-Seitenansicht desselben.

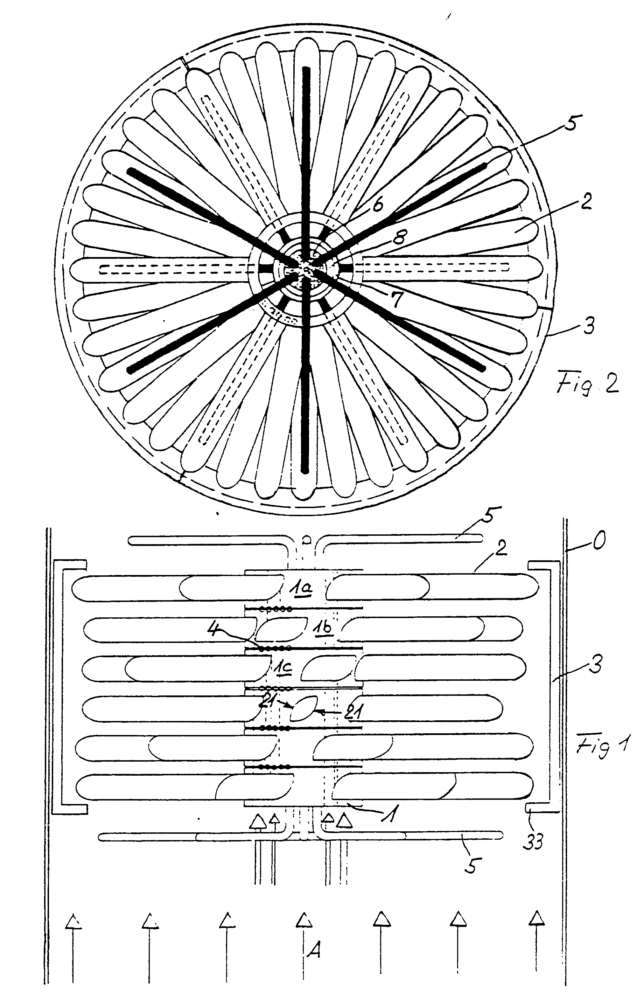

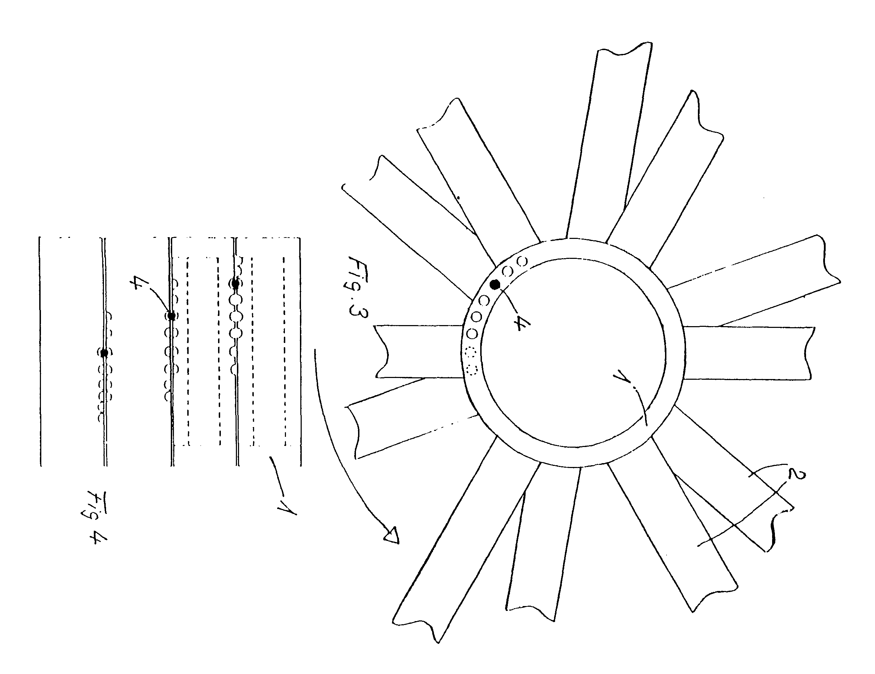

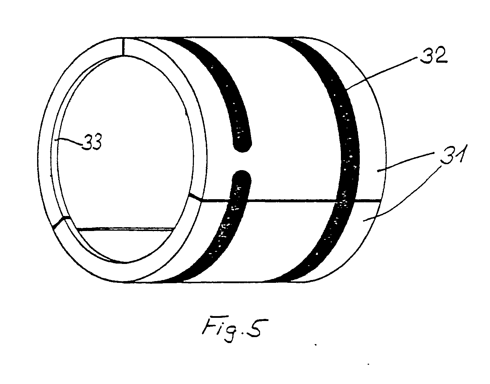

In Fig. 1 erkennt man eine in einen Rauchgasabzug 0 in Form eines Rohres eingesetzte Nachbrenn-Einrichtung nach der Erfindung, die sich im wesentlichen aus einer Anzahl (hier sechs) aneinandergereihten Basisteilen 1 zusammensetzt, von denen jedes eine Mehrzahl von Trägerelementen 2 trägt. Im vorliegenden Ausführungsbeispiel ist jedes Basisteil 1 mit sechs in gleichen winkelförmigen Abständen angeordneten Trägerelementen ausgerüstet. Die Trägerelemente 2 haben die Gestalt flachförmiger Stäbe, Finger oder Flügel und bilden Katalysatorflächen 21. Die Basisteile 1 haben die Form von Ringen und bestehen zusammen mit den in diesem Beispiel integral an ihnen angeformten Trägerelementen aus keramischem Material. Die Trägerelemente 2 sind mit einem geeigneten Katalysatormaterial, das beispielsweise ein Edelmetall wie Platin sein kann, beschichtet. Dieses Katalysatormaterial kann auch auf bzw. in der Oberfläche der Trägerelemente 2 vorgesehen sein. Die Basisteile 1 mit ihren Trägerelementen sind von einem Gehäusemantel 3 umgeben, der seinerseits in dem Rauchgasabzug 0 sitzt. Die Trägerelemente 2 erstrecken sich, wie erkennbar, quer zur Strömungsrichtung A von nachzuverbrennendem, in dem Rohr 0 geführten Rauchgas. Die Trägerelemente 2 sind, wie aus Fig. 1 erkennbar, mit ihren Katalysatorflächen 21 geneigt zur Strömungsrichtung A angeordnet, um möglichst günstige aerodynamische Strömungsverhältnisse, d.h. eine möglichst innige Umspülung mit dem Rauchgas zu ermöglichen. Wie man speziell aus der Draufsicht der Fig. 2 erkennt, trägt jedes ringförmige Basisteil in diesem Ausführungsbeispiel sechs sich stern- oder strahlenförmig nach außen erstreckende Trägerelemente. Dabei sind benachbarte Basisteile 1a, 1b, 1c usw. so versetzt zueinander angeordnet, daß dem Rauchgas eine schraubenwendelförmige Richtung aufgezwungen wird und, wie erwähnt, die Katalysatorflächen 21 möglichst intensiv umströmt werden. Um den Versatz der Trägerelemente 2 zueinander und damit die Richtung der Rauchgasleitung verändern zu können, ist eine Verstellmöglichkeit in Form Rastelemente 4 vorgesehen, die im einzelnen aus Fig. 3 und 4 hervorgeht. Es handelt sich dabei um Kugeln, die in Mulden an der Außenfläche der Ringe der Basisteile 1 eingreifen und jeweils benachbarte Basisteile in einer bestimmten Position verriegeln. Durch Anordnung mehrerer solcher Mulden in bestimmten Abständen sind unterschiedliche Einstellungen möglich. Dabei wurde im vorliegenden Beispiel eine 10`-Verstellmöglichkeit vorgesehen, jedoch ist es selbstverständlich, insbesondere bei größeren Durchmessern möglich, eine feinere Winkelverstellung vorzusehen.

Der die Einrichtung umgebende Gehäusemantel 3, der ebenfalls aus keramischem Material bestehen sollte, um die notwendige Hitzebeständigkeit zu gewährleisten, ist, wie aus Fig. 5 erkennbar, zum Zwecke einer leichten Montage der Einrichtung segmentartig aufgeteilt und besteht hier aus drei Mantelteilen 31, die im eingebauten Zustand kraftschlüssig durch Spannringe 32 zusammengehalten werden. Der Gehäusemantel 3 weist begrenzende Randflansche 33 auf, deren Innendurchmesser etwas kleiner als der Außendurchmesser der Trägerelemente, so daß die Basisteile 1 mit den Trägerelementen 2 am Herausfallen aus dem Mantel 3 gehindert werden, sich innerhalb desselben aber in gewissen Grenzen ausdehnen und bewegen können.

Durch das Innere der aneinandergefügten Basisteile 1 erstrecken sich Drähte 5 aus gut wärmeleitendem Material, die in einen Kern 6 aus wärmeisolierendem keramischem Werkstoff eingebettet sind. Dieser Kern ist mit geeigneten, hier nicht näher gezeigten Abstandshaltern in einem inneren Mantel 7, ebenfalls aus keramischem Material, gehalten. Letzterer wiederum stützt sich über Abstandshalter an den Innenseiten des Basisteils 1 ab. Die aus dem Kern nach oben und unten herausragenden Enden der Drähte 5 sind, wie dargestellt, abgewinkelt, und dabei derart angeordnet, daß sie jeweils Winkelhalbierende zwischen den benachbarten Trägerelementen 2 bilden. Sie liegen damit im freien Eintritts- und Austrittsquerschnitts für das Rauchgas in die bzw. aus der Katalysatoreinrichtung. Infolge ihrer Wärmeleitfähigkeit haben die Drähte 5 die Wirkung, daß sie bei Anlaufen der Einrichtung, also beim Beginn des Heizens, relativ schnell die höhere Wärme an der Eintrittsseite zur Austrittsseite leiten und hier zu einer Erhöhung der Umgebungstemperatur beitragen, so daß die ohne solche Drähte zunächst an der Ausgangsseite noch niedrigere Temperatur derart erhöht wird, daß an der Austrittsseite schon zu einem relativ früheren Zeitpunkt eine Zündung an den äußeren Trägerelementen stattfindet. Im Falle eines Absinkens der Temperatur an der Eintrittsseite, z. B. bei einem Nachlegen von Brennstoff oder bei sonstigen Unregelmäßigkeiten in der Verbrennung, kann die Temperatur an der Eintrittsseite zeitweise erheblich absinken, wodurch die kritische Zündtemperatur der eintrittsseitigen Trägerelemente unterschritten werden kann. In einem solchen Falle fließt Wärme entgegen der Strömungsrichtung A durch die Drähte 5 von der Austrittsseite zur Eintrittsseite zurück und trägt hier in umgekehrter Weise, wie bezüglich des Anlaufens der Einrichtung beschrieben, zu einer Erhöhung der Umgebungstemperatur und damit zum Wiedererreichen der Zündtemperatur bei.

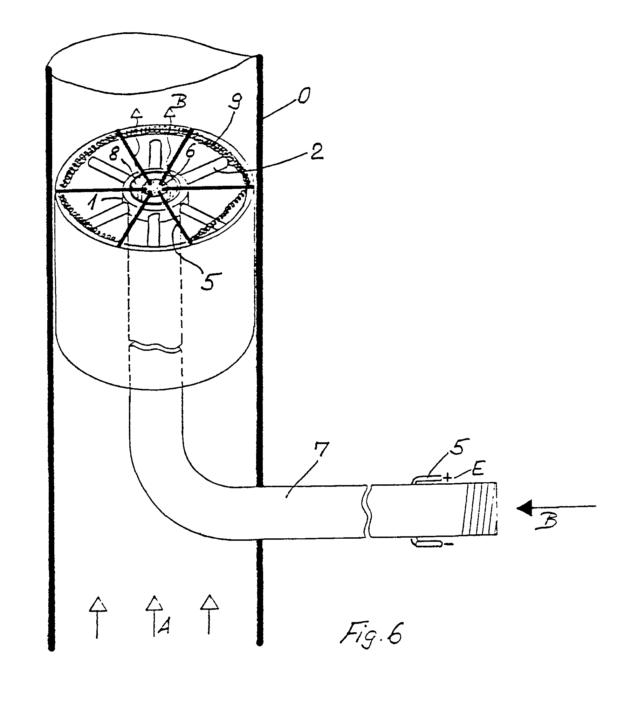

Die Drähte 5 können, wie in Verbindung mit dem in Fig. 6 dargestellten Ausführungsbeispiel erkennbar wird, auch noch eine weitere Funktion erfüllen. Dort ist der diese Drähte 5 und deren Kern 6 mit dem Kanal 8 umgebende innere Mantel unterhalb des eintrittsseitigen Endes der durch Basisteile 1 und Trägerelemente 2 bestimmten Nachbrenneinrichtung aus dem Rauchgasabzug 0 herausgeführt und kann an eine Quelle für Sekundärgase, angedeutet durch den Pfeil B, geschlossen werden. Diese Sekundärgase durchströmen den Kanal 8 und treten austrittsseitig zur Unterstützung der Nachverbrennung in diesem Bereich aus. Damit ist es möglich, in diesem Bereich zu einer Nachverbrennung von Stoffen beizutragen, die innerhalb der Katalysatoreinrichtung nicht durch Nachverbrennung abgebaut worden sind. So ist es auch möglich, dem Sekundärgasstrom B pulverförmige Materialien zuzusetzen, beispielsweise Kalk, um an der Austrittsseite eine chemische Verbindung, beispielsweise mit Schwefel, herzustellen. Weiterhin dienen die Drähte 5, die hier als elektrisch gut leitende Drähte vorgesehen sind und im unteren Bereich an eine elektrische Energiequelle E angeschlossen sein können, zur Beaufschlagung von Zündwiderständen 9 mit elektrischem Strom. Diese Zündelemente 9, die zwischen den austrittsseitigen Enden der Drähte 5 geschaltet sind, können zu einer zusätzlichen Wärmeerzeugung im Austrittsbereich und damit einer noch vollständigeren Nachverbrennung beitragen.

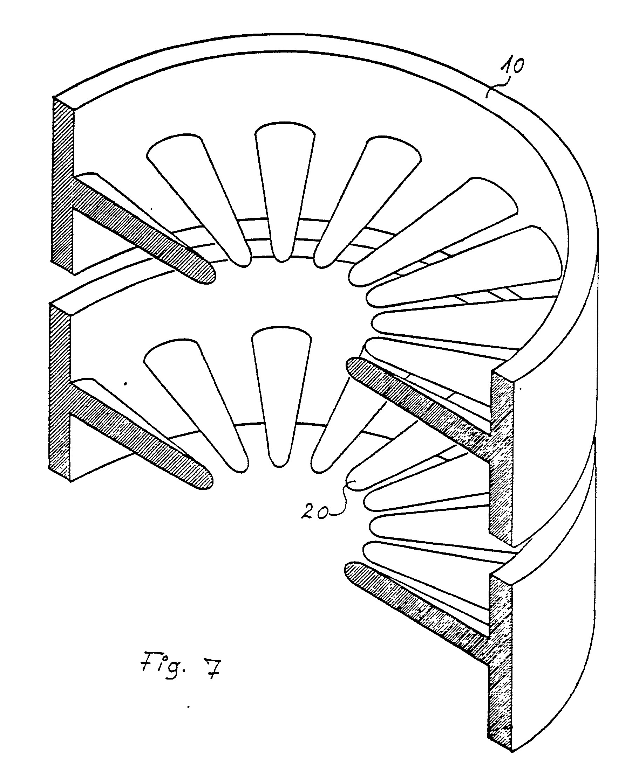

In Fig. 7 ist eine abgewandelte Ausführungsform der erfindungsgemäßen Einrichtung dargestellt, bei der sich stabförmige Trägerelemente 20 ähnlicher Ausbildung wie in Fig. 1 und 2 an segmentartigen Basisteilen 10 befinden und sich von diesen nach innen erstrecken. Eine solche Ausführungsform kann unter Umständen die Anordnung eines Gehäusemantels 3 überflüssig machen.

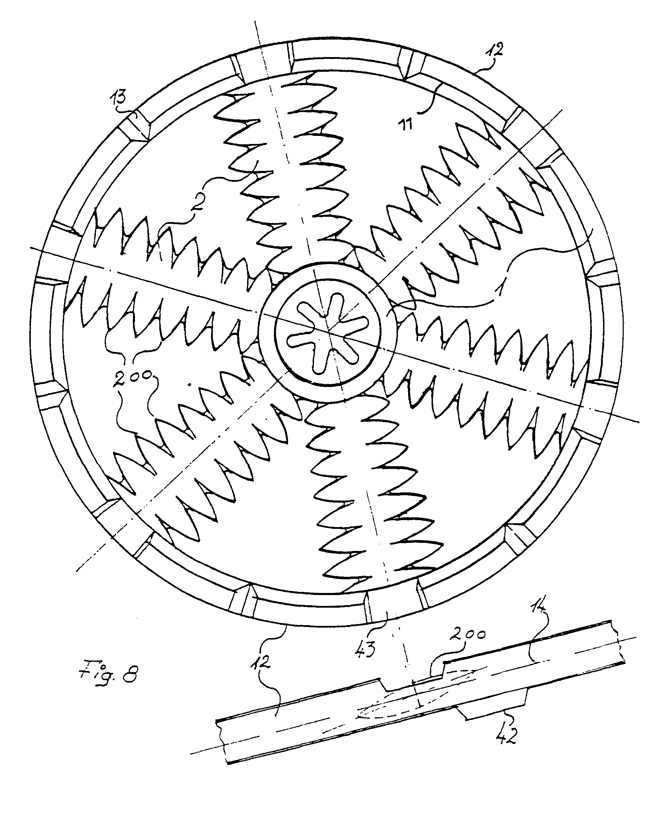

Fig. 8 zeigt ein ringförmiges Basisbauteil 1 einer erfindungsgemäßen Einrichtung, das zweiteilig mit einem Innenmantel 11 und einem Außenmantel 12 ausgebildet ist. Sechs Trägerelemente 2 sind an dem Basisteil 1 zwischen Innen und dem Außenmantel angeordnet und mit diesen verbunden.

Die Trägerelemente 2 sind als Rippen oder Kämme umfassende Rechen 200 ausgebildet. Dabei ist das Trägerelement von dem Innenring 11 zu dem Außenring 12 verlaufend sich erweiternd ausgebildet, so daß aufgrund dieser konischen Gestaltung in zweckmäßiger Ausführung der Erfindung zusammen mit den Rippen- oder Kammflächen besonders große Flächen für die katalytische Wirkung erreicht sind.

Im Bereich der Verbindungsstelle eines Trägerelements 2 mit dem Außenring 12 ist eine Ausnehmung 43 angeordnet, die ebenfalls in der Teil-Seitenansicht der Fig. 8 dargestellt ist. Daraus erkennt man, daß das kammartige Trägerelement 2 gegenüber der gemeinsamen Ebene 14 der Ringteile 11 und 12 zur Ausbildung eines bestimmten Strömungswiderstandes geneigt oder gekippt angeordnet ist. Gegenüber und versetzt zu der Ausnehmung 43 ist als Rastelement ein Zahn 42 ausgebildet, der zum Eingriff in eine entsprechende Ausnehmung eines nicht dargestellten benachbarten Basisteils bestimmt ist. Damit gewährleisten die Ausnehmungen 43 sowie die Zähne 42 zusammen mit weiteren Basisteilen eine Versatzanordnung, in der in der Einrichtung aufeinanderfolgende Trägerelemente um einen durch den Abstand zwischen der Ausnehmung 43 und dem Zahn 42 bestimmten Winkelabstand versetzt sind.

In Fig. 8 ist zudem zwischen zwei benachbarten Trägerelementen 2 an dem Außenring 12 eine in Form einer Kerbe ausgebildete Sollbruchstelle 13 vorgesehen. Damit ergibt sich bei hohen Wärmespannungen ein definiertes, an vorbestimmten Stellen auftretendes Reißen des Basiselements.

**Patentansprüche**

1. Einrichtung zum katalytischen Verbrennen, insbesondere Nachbrennen von Gasen, Abgasen Rauchgasen oder ähnlichen brennbaren Substanzen mit einer Trägerstruktur (Substrat) und einem auf dieser angebrachten Katalysator, wobei die Einrichtung im Strömungsweg der brennbaren Substanzen angeordnet ist und ein Basisteil mit von diesem getragenen, sich mit Katalysatorflächen quer in den Strömungsweg erstreckenden Trägerelementen umfaßt, dadurch gekennzeichnet, daß die Trägerelemente (2, 20, 200) als strahlen-, fächer- oder speichenförmig angeordnete Einzelstege mit geneigt zur Strömung (A) vorgesehenen, deren Richtung bestimmenden Katalysatorleitflächen (21) ausgebildet sind.

2. Einrichtung nach Anspruch 1, dadurch gekennzeichnet, daß sie eine Mehrzahl form- und/oder kraftschlüssig zusammenfügbarer Basisteile (1a, 1b, 1c) umfaßt, von denen sich die Trägerelemente (2) mit ihren Katalysatorflächen (21) in den Strömungsweg (A) erstrecken.

3. Einrichtung nach Anspruch 1 oder 2, dadurch gekennzeighnet, daß die Trägerelemente an einem zweiteiligen, einen Innen- und einen Außenmantel (11, 12) bestimmenden Basisteil angeordnet sind.

4. Einrichtung nach Anspruch 3, dadurch gekennzeichnet, daß die Trägerelemente quer zu ihrer Längserstreckung geteilt sind.

5. Einrichtung nach einem der Ansprüche 1 bis 4, dadurch gekennzeichnet, daß sich die Trägerelemente (20) von einem außen liegenden Basisteil (10) strahlenförmig nach innen erstrecken.

6. Einrichtung nach einem der Ansprüche 1 bis 4, dadurch gekennzeichnet, daß in Achs- bzw. Strömungsrichtung benachbarte Trägerelemente (2) zueinander versetzt sind.

7. Einrichtung nach einem der Ansprüche 1 bis 6, dadurch gekennzeichnet, daß die Trägerelemente mit nach Art von Rechen (200), Rippen oder Kämmen vergrößerten Oberflächen ausgebildet sind.

8. Einrichtung nach einem der Ansprüche 1 bis 7, dadurch gekennzeichnet, daß die Basisteile (1) mit den Trägerelementen (2) von einem mehrteiligen Gehäusemantel (3) umgeben und gehalten sind, der sich im wesentlichen in Achs- oder Strömungsrichtung erstreckt.

9. Einrichtung nach einem der Ansprüche 1 bis 8, dadurch gekennzeichnet, daß, in Achs- bzw. Strömungsrichtung (A) verlaufend, Drähte (5) aus wärmebeständigem und gut wärmeleitendem Material, z. B. einer Chrom-Nickel-Legierung, vorgesehen sind, die im Bereich der Basisteile (1) und Trägerelemente (2) in eine Isoliermasse mit guten Wärmespeichereigenschaften eingebettet sind und außerhalb dieses Bereiches in den Strömungsweg (A) hineinragen.

10. Einrichtung nach einem der Ansprüche 1 bis 8, dadurch gekennzeichnet, daß, innerhalb der Basisteile (1) und Trägerelemente (2) in Achs- bzw. Strömungsrichtung verlaufend, Drähte (5) aus wärmebeständigem und gut wärmeelektrischleitendem Material, z. B. aus einer Chrom-Nickel-Legierung, vorgesehen sind, die in einen Kern (6) aus isolierendem, elektrisch nicht leitendem Material wie keramischem Material eingebettet sind, wobei dieser Kern (6) von einem zu seiner Außenfläche beabstandeten inneren Mantel (7) umgeben und zwischen Kern (6) nd innerem Mantel (7) ein Kanal (8) ausgebildet ist.

**Claims**

1. Device for the catalytic combustion, particularly the post combustion of gases, exhaustt gases, flue gases or similar combustible substances, having a support structure (substrate) and a catalyst arranged thereon, the device being arranged in the flow path of the combustible substances and comprising a base portion having support elements carried by it and extending transversally into the flow path with catalyst surfaces, characterized in that the support elements (2, 20, 200) are designed in the manner of radially, fan-like or spoke-like arranged individual webs having catalyst guide surfaces (21) inclined with respect to the flow (A) and defining the direction thereof.

2. Device according to claim 1, characterized in that it comprises a plurality of joinable base portions (1a, 1b, 1c) to be assembled positively and/or non-positively and from which portions the support elements (2) with their catalyst surfaces (21) extend into the flow path (A).

3. Device according to claims 1 or 2, characterized in that the support elements are arranged on a two-part base portion defining an inner and an outer jacket (11, 12).

4. Device according to claim 3, characterized in that the support elements are split transversally to their longitudinal extension.

5. Device according to one of claims 1 to 4, <u>characterized in</u> that the support elements (20) extend radially inwards from an outer base portion (10).

6. Device according to one of claims 1 to 4, <u>characterized in</u> that support elements (2) lying adjacent in the axial or flow direction are displaced with respect to one another.

7. Device according to one of claims 1 to 6, <u>characterized in</u> that the support elements are constructed with surfaces enlarged in the manner of rakes (200), ribs or combs.

8. Device according to one of claims 1 to 7, <u>characterized in</u> that the base portions (1) with the support elements (2) are surrounded and secured by a multipart casing jacket (3), which extends essentially in the axial or flow direction.

9. Device according to one of claims 1 to 8, <u>characterized in</u> that wires (5) made from thermostable and easily heat conducting material, e.g. a chromium-nickel alloy are provided extending in the axial or flow direction (A), which wires are embedded in the region of the base portions (1) and support elements (2) in an insulating material with good heat storage characteristics and, outside said area, project into the flow path (A).

10. Device according to one of claims 1 to 8, <u>characterized in</u> that within the base portions (1) and support elements (2) wires (5) made from thermostable and easily heat and electrically conducting material, e.g. a chromium-nickel alloy are provided extending in the axial or flow direction, which wires are embedded in a core (6) made from electrically non-conductive, insulating material, such as a ceramic material, said core (6) being surrounded by an inner jacket (7) spaced from the outer face thereof and a channel (8) being formed between core (6) and inner jacket (7).

## Revendications

1. Dispositif pour la combustion catalytique et, en particulier pour la postcombustion de gaz, de gaz d'échappement, de fumées ou d'autres corps combustibles analogues, muni d'une structure de support (substrat) et d'un cataliseur y appliqué, ce dispositif étant disposé dans la voie d'écoulement des corps combustibles et comportant une partie basale, portant des éléments de support, qui, avec des surfaces catalytiques, s'étend transversalement dans ladite voie d'écoulement, caractérisé en ce que lesdits éléments de support (2, 20, 200) sont exécutés sous forme d'éléments transversaux individuels à disposition rayonnée ou en éventail et présentant des surfaces catalytiques (21), orientées obliquement par rapport à la voie d'écoulement des corps combustibles (A), dont ils déterminent l'orientation.

2. Dispositif selon la revendication 1, caractérisé en ce qu'il comporte une pluralité de parties basales (1a, 1b, 1c), susceptibles d'être réunis positivement au double point de vue géométrique et cinématique, dont les éléments de support (2) s'étendent avec leurs surfaces catalytiques (21) dans ladite voie d'écoulement (A).

3. Dispositif selon la revendication 1 ou 2 caractérisé en ce que lesdits éléments de support sont fixés à une partie basale bipartite définissent une enveloppe intérieure et une enveloppe extérieure (11, 12).

4. Dispositif selon la revendication 3, caractérisé en ce que lesdits éléments de support sont divisés transversalement par rapport à leur extension longitudinale.

5. Dispositif selon l'une ou l'autre des revendications précédentes 1 - 4, caractérisé en ce que les éléments de support (20) s'étendent, de manière rayonnante, vers l'intérieur à partir d'une partie basale périphérique (10).

6. Dispositif selon l'une ou l'autre des revendications précédentes 1 - 4, caractérisé en ce que des éléments de support voisin (2) sont mutuellement décalés axialement ou dans le sens de l'écoulement.

7. Dispositif selon l'une ou l'autre des revendications précédentes 1 - 6, caractérisé en ce que lesdits éléments de support sont exécutés avec des surfaces agrandies sous forme de râteaux (200), de nervures ou de peignes.

8. Dispositif selon l'une ou l'autre des revendications précédentes 1 - 7, caractérisé en ce que lesdites parties basales (1), munies des éléments de support (2), sont entourées et soutenues au moyen d'un boîtier multipartite faisant office d'enveloppe (3), s'étendant principalement en direction axiale ou d'écoulement.

9. Dispositif selon l'une ou l'autre des revendications précédentes 1 - 8, caractérisé en ce que sont prévus des fils (5) d'une matière réfractaire à la chaleur et thermoconductrice, telle qu'un alliage de chrome et de nickel, orientés axialement ou dans le sens d'écoulement et noyés, au niveau des parties basales (1) et des éléments de support (2), dans une masse calorifuge, qui est une excellente accumulatrice de chaleur, et pénétrant, en dehors de cette zone, dans la voie d'écoulement (A).

10. Dispositif selon l'une ou l'autre des revendications précédentes, caractérisé en ce que, dans les parties basales (1) et les éléments de support (2), sont prévus des fils (5) d'une matière réfractaire à la chaleur et bonne conductrice de la chaleur et de l'électricité, telle qu'un alliage de chrome et de nickel, qui sont noyés dans un noyau (6) d'une matière calorifuge, non conductrice de l'électricité, telle qu'une matière céramique, ce noyau (6) étant muni d'une enveloppe intérieure (7) distante de sa surface extérieure et un canal (8) étant aménagé entre le noyau (6) et son enveloppe intérieure (7).

*Fig 2*

*Fig 1*

1

Fig. 3

Fig 4

Fig.5

5

Fig. 6

Fig. 7

Fig. 8